# EUROPEAN PATENT APPLICATION

(11) **EP 1 876 543 A2**
(43) Date of publication of application: **09.01.2008**
(21) Application number: 07111563.8
(22) Date of filing: 02.07.2007
(51) Int. Cl.: G06F 17/30

(54) **Apparatus and method for managing content stored in portable digital device**

(30) Priority: 05.07.2006 KR 20060063151
(71) Applicant: SAMSUNG ELECTRONICS CO., LTD., Suwon-si, Gyeonggi-do 442-742 (KR)
(72) Inventor: Choe, Jong-Hoon, Seoul (KR); Ryu, Young-Jae, Gyeonggi-do (KR); Chang, Woo-Yong, Gyeonggi-do (KR)
(74) Representative: Brandon, Paul Laurence

(57) **Abstract**

An apparatus and method of managing content stored in portable digital devices is provided. The apparatus for managing content includes a device manager module (210) sensing a connection with a portable digital device (702), an application module (220) forming at least one function module for manipulating the content stored in the sensed portable digital device in an independent frame, and a user interface module (230) displaying an object (720) indicating the connected portable digital device on a wallpaper (710), and if the object is selected, displaying the independent frame.

## Description

Apparatuses and methods consistent with the present invention relate to a content management, and more particularly, to managing content, which can perform a content management by a modularized frame structure.

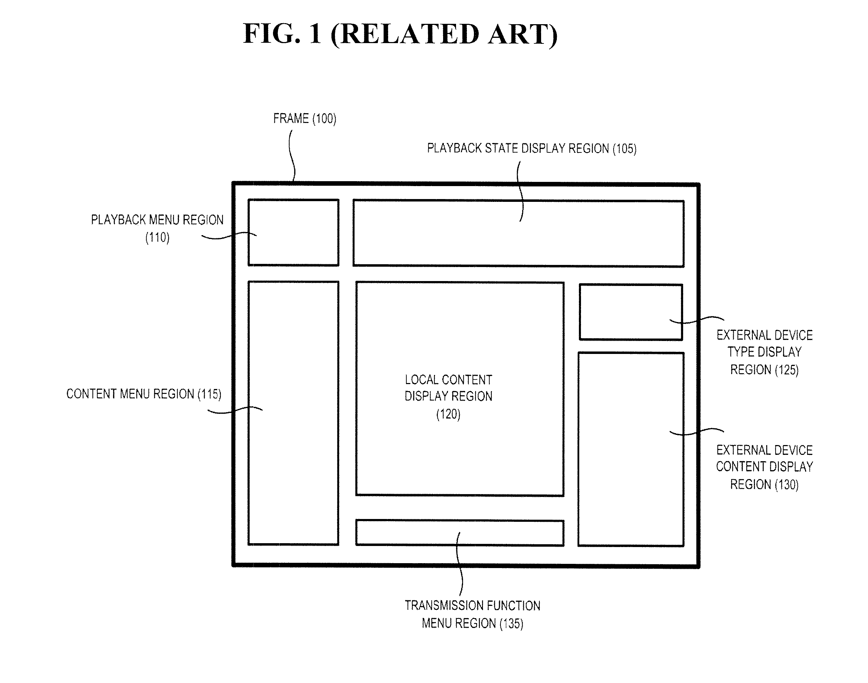

Currently, many personal computing devices have software mounted therein to connect to media in which content is stored and manage the content stored in the media. As illustrated in FIG. 1, this type of software for managing media content operates to display both a region for displaying content stored in an external device such as the media and a region for displaying content stored in a personal computing device in a single frame, so that a content exchange is made in the single frame.

Referring to FIG. 1, in order to display content stored in an external device, a personal computing device provides a user interface that is composed of a single frame.

The frame 100 includes a local content display region 120 for displaying content stored in the computing device, an external device type display region 125 for displaying the type of a connected external device, an external device content display region 130 for displaying content stored in the connected external device, a content menu region 115 for classifying the displayed content according to the content type such as music, moving images, photographs, and so forth, and displaying the classified content, a playback menu region 110 for playing the selected content, a playback state display region 105 for displaying the playback state of the content, and a transmission function menu region 135 for transmitting the displayed content to other storage media.

In the conventional user interface as illustrated in FIG. 1, if a user intends to display content stored in another external device, he/she should release the connection with the existing external device and connect to the new intended external device, or should additionally allocate a region for displaying the type of the external device to be newly connected and the content in the frame 100. That is, it is difficult to simultaneously display content stored in a plurality of external devices, and even if it is possible, the simultaneous display of the content should be performed in a single frame, to cause the structure of the user interface to be greatly complicated.

Also, in the prior art, the user interface constructed by external devices, content types, and use types is integratedly supported by a single software, and thus in the case where an external device is extended in function or a software module performing a specified function is maintained/repaired, it affects the entire frame.

In order to overcome the drawback that the structure of a user interface becomes complicated in the prior art, a scheme for separately providing software by content types has been proposed. That is, music content dedicated software, image content dedicated software, and moving image dedicated software have been separately provided to simplify the structure of the user interface. However, since the recent portable digital device processes diverse kinds of content and users make composite use of diverse types of content, it is contradictory to the user's use form to separately purchase software by content types.

Preferred embodiments of the present invention aim to provide a method of managing media content through a modularized frame structure.

Another aim of preferred embodiments of the present invention is to support a user so that the user can intuitively recognize a plurality of portable digital devices such as an MP3 player, a digital camera, and so forth, and easily and conveniently do a work such as a file exchange in a system that recognizes and supports the portable digital devices.

Additional features of the invention will be set forth in part in the description which follows and in part will become apparent to those having ordinary skill in the art upon examination of the following or may be learned from practice of the invention.

According to an aspect of the present invention, there is provided an apparatus for managing content, the apparatus including a device manager module sensing a connection with a portable digital device, an application module forming at least one function module for manipulating the content stored in the sensed portable digital device in an independent frame, and a user interface module displaying an object indicating the connected portable digital device on a wallpaper, and if the object is selected, displaying the independent frame.

According to another aspect of the present invention, there is provided an apparatus for managing content, the apparatus including a plurality of connection ports connectable to a plurality of portable digital devices, and a wallpaper displaying an object that indicates the apparatus itself storing local content, and a plurality of objects that indicate the plurality of portable digital devices when the plurality of portable digital devices are connected to the connection ports, wherein if a user selects a certain object among the objects being displayed on the wallpaper, a user interface for displaying a list of content related to the selected object is displayed on the wallpaper.

According to still another aspect of the present invention, there is provided a method of managing content, the method including (a) sensing a connection with a portable digital device, (b) forming at least one function module for manipulating the content stored in the sensed portable digital device in an independent frame, (c) displaying an object indicating the sensed portable digital device on a wallpaper, and (d) if the object is selected, displaying the independent frame on the wallpaper.

According to yet another aspect of the present invention, there is provided a method of managing content, the method including (a) displaying an object that indicates the apparatus itself storing local content, and a plurality of objects that indicate a plurality of portable digital devices when the plurality of portable digital devices are connected to a plurality of connection ports, (b) a user selecting a certain object among the objects being displayed on a wallpaper, and (c) displaying a user interface for displaying a list of content related to the selected object.

Further features of the present invention are set out in the appended claims.

The present invention will be more apparent from the following detailed description by way of example only, taken in conjunction with the accompanying drawings, in which:
FIG. 1 is a view illustrating a user interface for displaying content stored in an external device according to the prior art;
FIG. 2 is a block diagram illustrating the construction of a content management apparatus according to an exemplary embodiment of the present invention;
FIG. 3 is a flowchart illustrating a method of indicating local content and media content according to an exemplary embodiment of the present invention;
FIG. 4 is a flowchart illustrating a method of displaying a user interface according to an exemplary embodiment of the present invention;
FIG. 5 is a flowchart illustrating a method of moving local content or media content according to an exemplary embodiment of the present invention;
FIG. 6 is an exemplary view illustrating an example of an object of a content management apparatus according to an exemplary embodiment of the present invention;
FIGS. 7A and 7B are views illustrating a process of displaying an object of a portable digital device according to an exemplary embodiment of the present invention;
FIGS. 8A to 8F are exemplary views illustrating examples of objects of portable digital devices according to an exemplary embodiment of the present invention;
FIG. 9 is an exemplary view illustrating examples of objects of different portable digital devices being displayed on a wallpaper of the content management apparatus according to an exemplary embodiment of the present invention;
FIGS. 10A to 10C are exemplary views illustrating a user interface for manipulating local content according to an exemplary embodiment of the present invention;
FIG. 11 is an exemplary view illustrating a user interface for manipulating media content according to an exemplary embodiment of the present invention; and
FIGS. 12A to 12C are exemplary views illustrating local content being transmitted to the portable digital devices according to an exemplary embodiment of the present invention.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

The present invention will be described herein with reference to the accompanying drawings illustrating block diagrams and flowcharts for explaining an apparatus and method of managing content stored in portable digital devices according to exemplary embodiments of the present invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In the following description of the present invention, the term "portable digital device" means a portable device that can generate or play diverse kinds of content such as a photograph, a moving image, music, and so forth, and means a device that has a storage means mounted therein, such as a memory, and thus can store generated content. In addition, it is defined that storage media, which do not generate or play digital content, but simply store the digital content, are included in the portable digital device.

The term "digital management device" means a device that manages diverse kinds of local content or that is connected to the portable digital device and displays the content stored in the portable digital device. Here, the term "content management" means all operations for accessing the content such as a storage, movement, deletion, and playback of the content.

The content management device allocates the local content and the content stored in the portable digital content to a modularized frame structure, and displays the frame on a display screen.

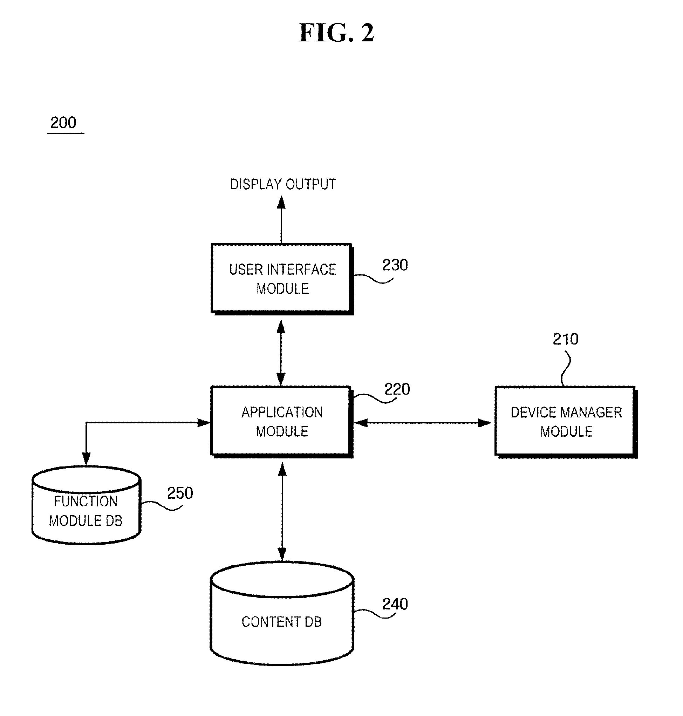

FIG. 2 is a block diagram illustrating the construction of a content management apparatus according to an exemplary embodiment of the present invention. Referring to FIG. 2, the content management apparatus 200 according to an exemplary embodiment of the present invention includes a device manager module 210, an application module 220, a user interface module 230, a content database (DB) 240, and a function module DB 250.

In the exemplary embodiment of the present invention, the term "module", as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented so as to execute one or more CPUs in a device or a security multimedia card.

The device manager module 210 senses or detects a plurality of portable digital devices connected to the content management apparatus 200, and provides an environment in which the content management apparatus 200 can communicate with the respective portable digital devices.

The content DB 240 stores therein various kinds of content such as a photograph, a moving image, music, and so forth. In order to discriminate between the content stored in the content DB 240 and the content stored in the portable digital device, it is defined over the entire description of the present invention that the content stored in the content DB 240 of the content management apparatus 200 is "local content", and the content stored in the portable digital device is "media content".

The application module 220 manipulates the local content stored in the content DB 240 or the media content provided through the device manager module 210. In this case, the term "content manipulation" includes playback of the local content or the media content, and classification of the local content or the media content according to a content type such as a photograph, a moving image, and music, according to a user's request. Also, the "content manipulation" includes movement of the local content to the portable digital device, and movement of the media content to the content management apparatus 200, according to a user's command. In addition, the "content manipulation" includes edition, printing, and storing of the content selected by the user in another storage medium.

The user interface module 230 provides a user interface that enables the user to visually or aurally recognize the content manipulated by the application module, and provides a user interface that enables the user to input commands for the content manipulation. In this case, the user interface is designed only to indicate, i.e., represent or show, function modules corresponding to the content management apparatus 200 and the respective portable digital devices in a main frame. That is, various functions required to play the content such as a photograph, a moving image, and music, are implemented as unit function modules and pre-stored in the function module DB 250, and the application module 220 extracts only required function modules from the function module DB 250 according to the content management apparatus 200 or the portable digital device, and provides the extracted function modules to the user interface 230. Then, the user interface module 230 presents the extracted function modules in the main frame. For example, in the case where the portable digital device is an MP3 player playing MP3 music files, the user interface module 230 presents the function modules providing various kinds of functions required to play the MP3 music files in a frame. In this case, it can be understood that the function modules stored in the function module DB 250 include not only the function modules for the interface with the user but also function modules required to perform functions provided from the corresponding apparatus or devices.

As described above, the functions for playing various kinds of content are implemented in the form of a function module and pre-stored, and thus in the case of updating a specified function, only the corresponding function module can be updated, so that the result of updating can be reflected in any portable digital device connected to the apparatus. Also, in the case where a new function is added, a function module corresponding to the added function is added to the function module DB 250, and this facilitates the maintenance/repair and extension of functions for the content playback.

In addition, the user interface module 230 displays the portable digital device connected to the content management apparatus 200 on the wallpaper of the content management apparatus 200 as an independent object. Accordingly, the user can intuitively recognize the type and the number of portable digital devices presently connected, and the content exchange between the content management apparatus 200 and the portable digital device can be easily performed. This independent object may be pre-stored in the function module DB 250 of the content management apparatus 200, or may be provided from the portable digital device through the device manager module 210.

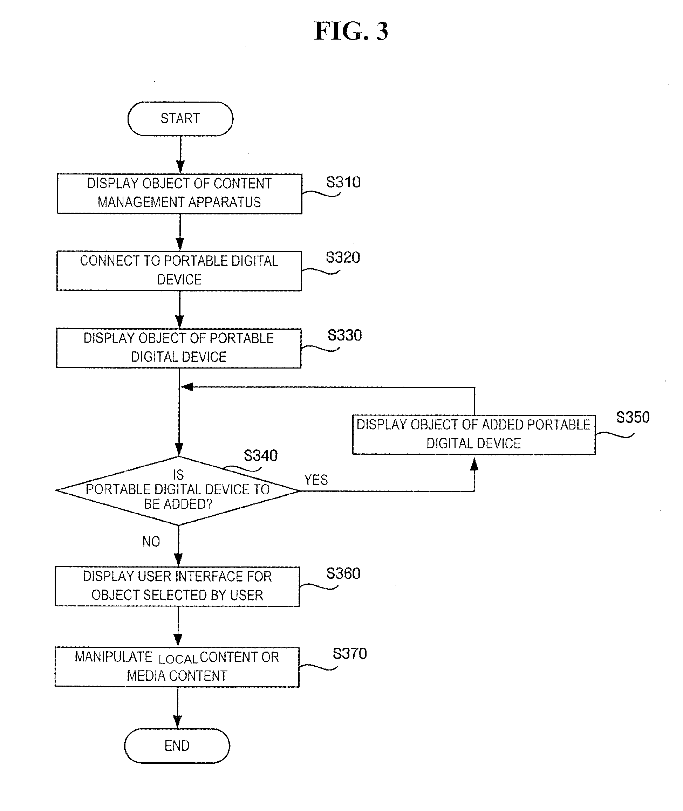

FIGS. 3 to 5 are flowcharts illustrating examples of a content management method that is performed by the operation of the modules illustrated in FIG. 2.

The operation of the modules illustrated in FIG. 2 will now be described in more detail with reference to the flowcharts illustrated in FIGS. 3 to 5.

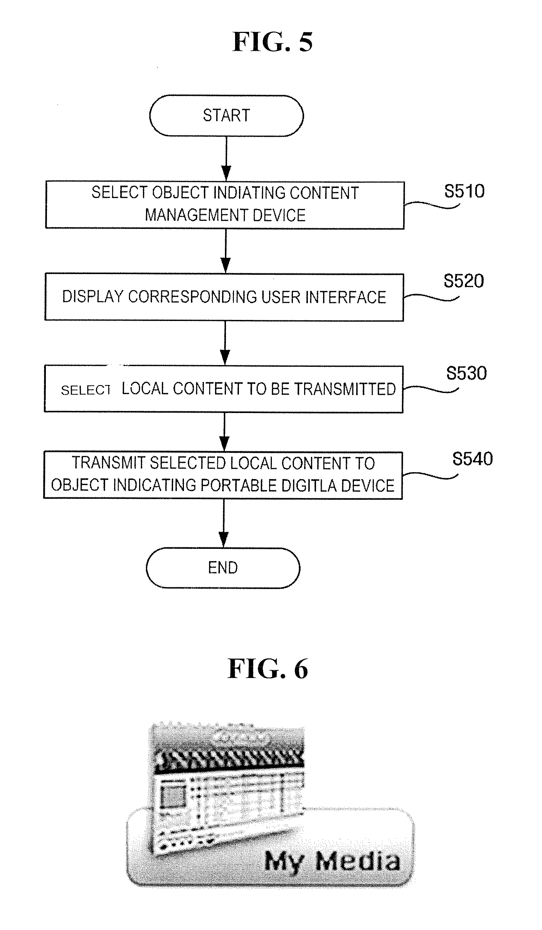

FIG. 3 is a flowchart illustrating a method of indicating local content and media content according to an exemplary embodiment of the present invention. First, when the content management apparatus 200 such as a personal computer starts its operation, the application module 220 displays an object of the content management apparatus 200 on the wallpaper of the content management apparatus 200 through the user interface module 230 (S310). In FIG. 6, an example of the object is illustrated.

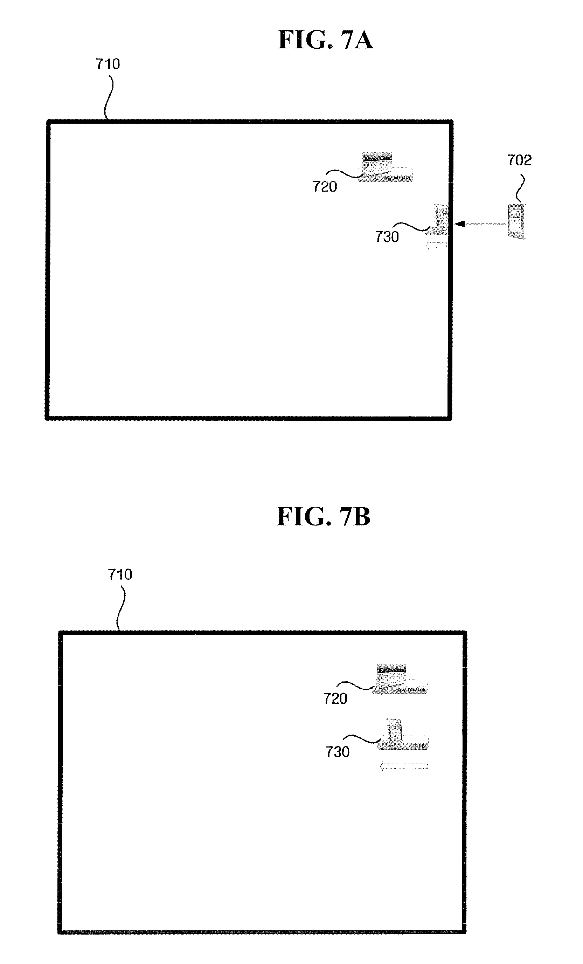

Then, if the user connects the portable digital device with the content management apparatus 200 (S320), the device manager module 210 senses the portable digital device, and informs the application module 220 of the sensed portable digital device. The application module 220 then displays the object of the connected portable digital device on the wallpaper through the user interface module 230 (S330). When the portable digital device is connected to the content management apparatus, the corresponding object is displayed in such a manner that it glidingly moves from the outside of the wallpaper to the inside thereof, as shown in FIGS. 7A and 7B.

That is, as illustrated in FIG. 7A, when an MP3 player 702 that plays an MP3 music file is connected to the content management apparatus 200 in a state that the object 720 of the content management apparatus 200 is displayed on the wallpaper 710, the object 730 of the MP3 player 720 moves as if it entered from the outside of the wallpaper 710 to the inside of the wallpaper. Then, as illustrated in FIG. 7B, the object stops after moving a predetermined distance.

In moving the object 730, the abstract concept that the portable digital device existing in the real world enters into the virtual world of the content management apparatus 200 through the connection with the content management apparatus 200 is visualized by animation, and thus a user can naturally and intuitively accept the process of recognizing the existence of the portable digital device without any gap or shock. In addition, this animation enables the user to adequately acknowledge the fact that the portable digital device has been connected to the content management apparatus and then to attempt the manipulation of the content stored in the portable digital device.

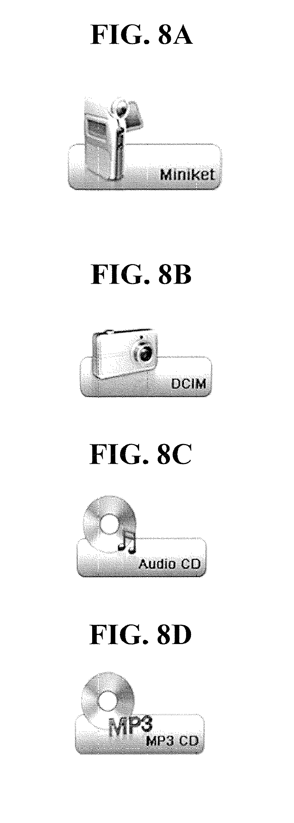

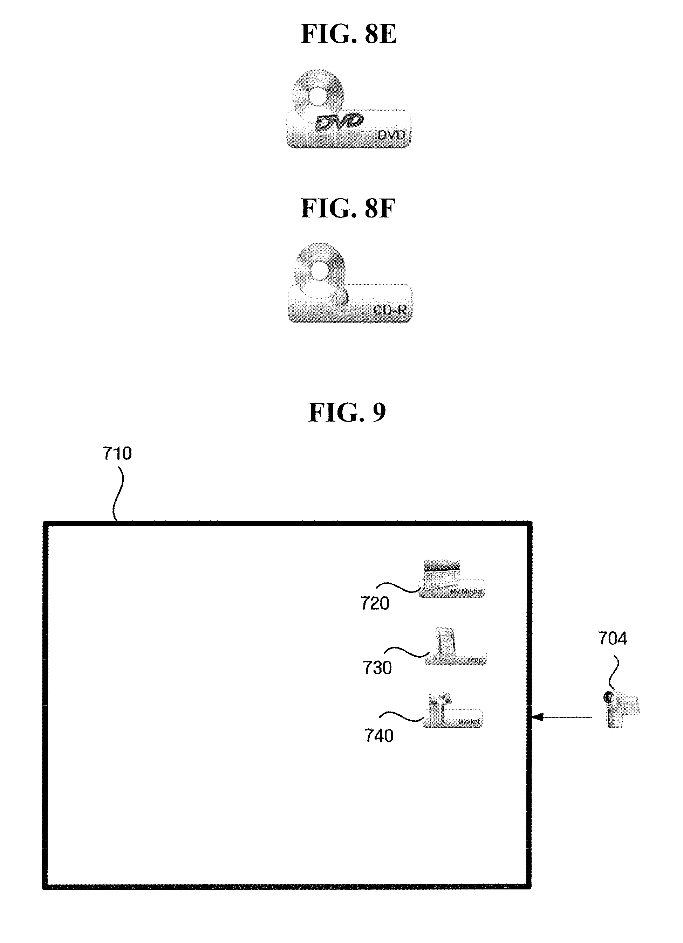

After the object of the portable digital device is displayed on the wallpaper as illustrated in FIG. 7B, the user may add another portable digital appliance. In this case, the object of the portable digital device newly added may be displayed on the wallpaper as illustrated in FIGS. 7A and 7B (S340 and S350). At this time, objects as illustrated in FIGS. 8A to 8F may be displayed according to the newly added portable digital devices. Accordingly, the user can intuitively recognize the types and the number of portable digital devices connected to the content management apparatus through the objects displayed on the wallpaper. As illustrated in FIG. 9, the object 740 of the newly added portable digital device 704 is displayed on the wallpaper together with other objects 720 and 730. For this, the content management apparatus 200 includes a plurality of external device connection ports connectable to a plurality of portable digital devices.

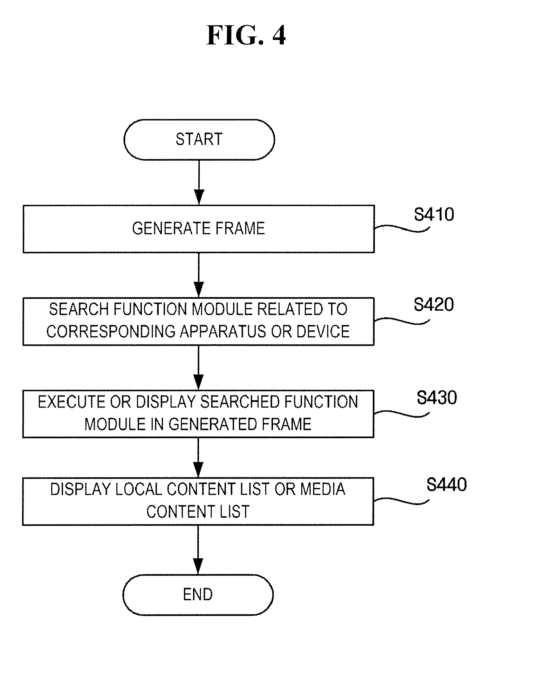

If the object of the content management apparatus 200 and the objects of the portable digital devices are displayed on the wallpaper, the user may select a desired object. Then, the application module 220 displays the user interface for the object selected by the user through the user interface module 230 on the basis of the function modules stored in the function module DB 250 (S360). A method of displaying the user interface will now be described in more detail with reference to FIG. 4.

The user manipulates the local content or the media content through the user interface (S370).

FIG. 4 is a flowchart illustrating the method of displaying the user interface according to an exemplary embodiment of the present invention.

If the user selects an object displayed on the wallpaper, the application module 220 generates a frame for the selected object (S410). Then, the application module 220 searches for the function modules related to the corresponding apparatus or device from the function module DB 250 (S420).

For example, function modules for an MP3 player may include an audio environment setting module, an audio codec module, a log manager module, an audio album module, a navigation module, and so forth, and function modules for a digital camcorder may include an audio codec module, a video codec module, a media browser module, a media player module, a multi-format conversion module, and so forth.

Then, the application module 220 executes the searched function modules or presents them in the frame generated through the user interface module 230 S430, and then displays a list of local content stored in the content DB 240 or a list of media content stored in the portable digital device through the user interface module 230 (S440).

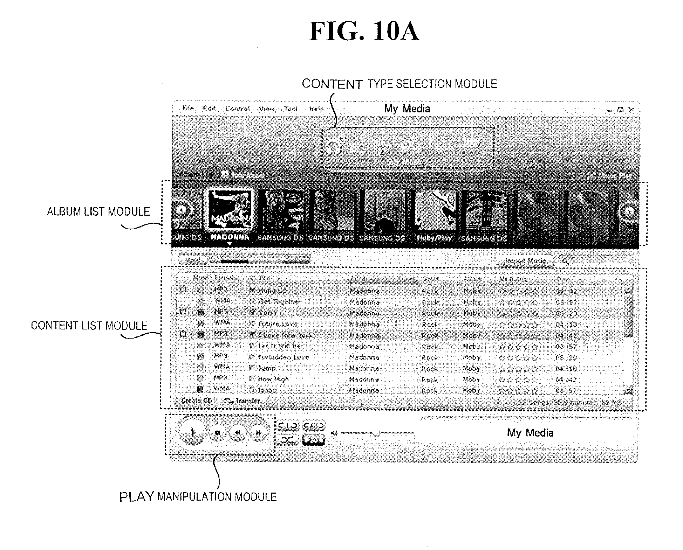

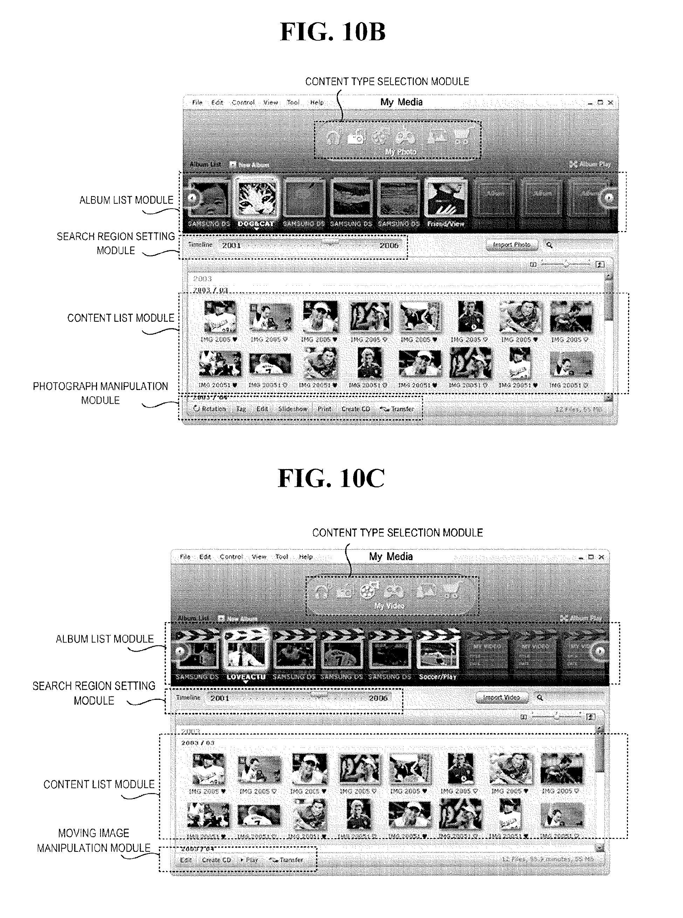

FIGS. 10A to 10C are exemplary views illustrating the user interface for manipulating the local content stored in the content management apparatus 200 that is provided by the user interface module 230 according to an exemplary embodiment of the present invention. Here, FIG. 10A shows a list of music content among the local content, FIG. 10B a list of photograph content, and FIG. 10C a list of moving image content, respectively. In this case, respective function modules are pre-stored in the function module DB 250.

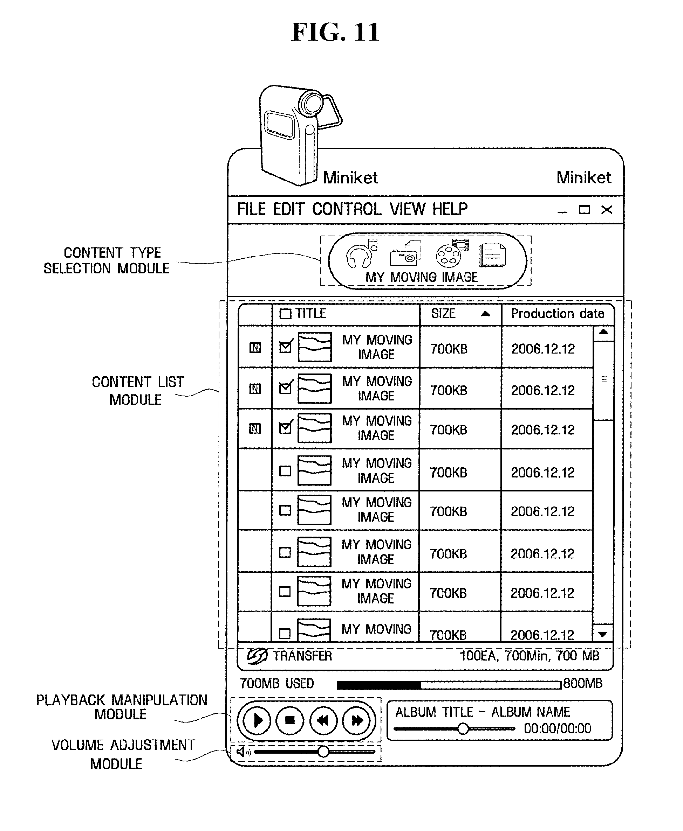

FIG. 11 is an exemplary view illustrating the user interface for manipulating media content stored in the portable digital device provided by the user interface module 230 according to an exemplary embodiment of the present invention. In FIG. 11, the user interface for a camcorder among the portable digital devices is illustrated, and the respective function modules illustrated in the drawing are pre-stored in the function module DB 250.

FIG. 5 is a flowchart illustrating the method of moving local content or media content according to an exemplary embodiment of the present invention. In FIG. 5, it is exemplified that the local content is transmitted to a portable digital device.

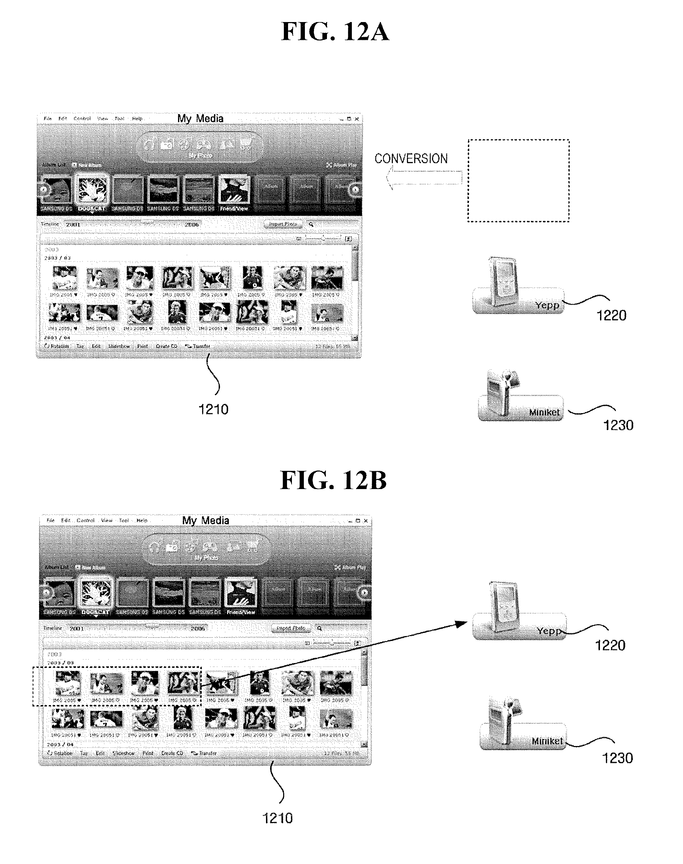

First, the user selects an object indicating the content management apparatus (S510). In this case, the selected object as illustrated in FIG. 12A is converted into a user interface 1210 and displayed (S520).

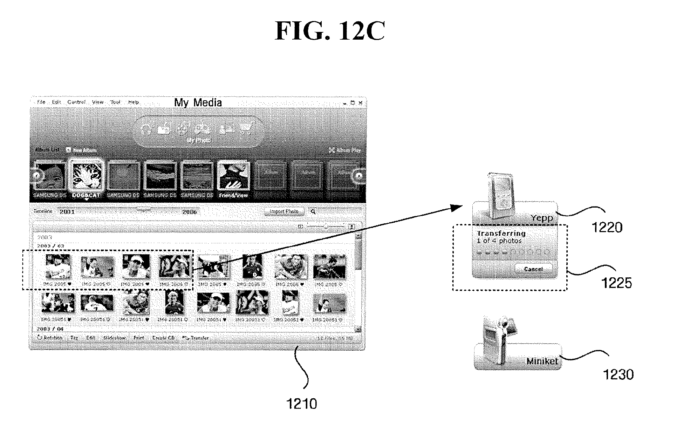

The user selects local content to be transmitted (S530), and moves the selected local content to an object 1220 of an MP3 player as illustrated in FIG. 12B (S540). In this case, as the object 1220 of the MP3 player is extended, a region 1220 indicating the transmission state as illustrated in FIG. 12C is displayed.

Through the above-described method, the user may transmit the local content to an object 123 of a camcorder or transmit the media content between the portable digital devices. In this case, the term "transmission" includes a copy and a movement.

As described above, according to preferred embodiments of the present invention, the user can manage the media content more conveniently. In addition, an efficient software maintenance and repair for the portable multimedia devices can be achieved.

Although exemplary embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (200) for managing content, the apparatus comprising:
a device manager module (210) which detects a connection with a portable digital device (702);
an application module (220) which forms at least one function module for manipulating content stored in the portable digital device in an independent frame; and
a user interface module (230) which displays an object (720) of the portable digital device on a wallpaper (710), and, if the object is selected, displaying the independent frame.

2. The apparatus (200)of claim 1, wherein the object (720) is displayed as the object moves from an outside of the wallpaper (710) to an inside of the wallpaper.

3. The apparatus (200) of claim 1 or claim 2, wherein:
the user interface module (230) displays a user interface that shows a local content list; and
if a user moves selected local content to the object (720), the application module (220) transmits the selected local content to the portable digital device (702) through the device manager module (210).

4. The apparatus (200) of claim 3, wherein while the selected local content is transmitted to the portable digital device (702), the object (720) displays a transmission state.

5. The apparatus (200) of any preceding claim, further comprising a function module database (DB) (250) storing the at least one function module.

6. An apparatus (200) for managing content, the apparatus comprising:
a local content;
a plurality of connection ports connectable to a plurality of portable digital devices (702); and
a wallpaper (710) which displays an object (720) of the apparatus storing the local content, and a plurality of objects of the plurality of portable digital devices if the plurality of portable digital devices are connected to the plurality of connection ports,
wherein if a user selects an object among the plurality of objects being displayed on the wallpaper, a user interface which displays a list of content corresponding to the selected object is displayed on the wallpaper.

7. The apparatus (200) of claim 6, wherein the user interface comprises at least one function module (220) formed in an independent frame to manipulate the content corresponding to the selected object (720).

8. The apparatus (200) of claim 6 or claim 7, wherein if one of the plurality of portable digital devices (702) is connected to one of the plurality of connection ports, an object (720) of the connected one of the plurality of portable digital devices is displayed as the connected one of the plurality of portable digital devices moves from an outside of the wallpaper (710) to an inside of the wallpaper.

9. The apparatus (200) of any one of claims 6 - 8, wherein if content selected by the user from the content list, which is displayed on the user interface, is moved to a certain object displayed on the wallpaper (710), the selected content is transmitted to a device corresponding to the certain object.

10. The apparatus (200) of claim 9, wherein while the selected content is transmitted, the certain object displays a transmission state.

11. A method of managing content, the method comprising:
detecting a connection with a portable digital device (702);
forming at least one function module (220) for manipulating content stored in the portable digital device in an independent frame;
displaying an object (720) of the portable digital device on a wallpaper (710); and
if the object is selected, displaying the independent frame on the wallpaper.

12. The method of claim 11, wherein the object (720) is displayed as the object moves from an outside of the wallpaper (710) to an inside of the wallpaper.

13. The method of claim 11 or claim 12, further comprising:
displaying a user interface that shows a local content list; and
transmitting local content selected by a user to the portable digital device (702) if the selected local content is moved to the object (720).

14. The method of claim 13, further comprising the object (720) displaying a transmission state while the selected local content is transmitted to the portable digital device (702).

15. A method of managing content, the method comprising:
displaying an object of the apparatus storing local content, and a plurality of objects of a plurality of portable digital devices (702) if the plurality of portable digital devices are connected to a plurality of connection ports;
a user selecting a certain object (720) among the plurality of objects being displayed on a wallpaper (710); and
displaying a user interface which displays a list of content corresponding to the selected object.

16. The method of claim 15, wherein the user interface comprises at least one function module (220) formed in an independent frame to manipulate the content corresponding to the selected object (720).

17. The method of claim 15 or claim 16, wherein if the portable digital device (702) is connected to the connection port, the object (720) of the connected portable digital device is displayed as the object moves from an outside of the wallpaper (710) to an inside of the wallpaper.

18. The method of any one of claims 15 - 17, further comprising transmitting the content selected by the user to the device corresponding to a certain object if the selected content is moved from the content list to the certain object displayed on the wallpaper (710).

19. The method of claim 18, further comprising the certain object displaying a transmission state while the selected content is transmitted.
